# EUROPÄISCHE PATENTSCHRIFT

(11) **EP 0 673 750 B1**
(45) Veröffentlichungstag und Bekanntmachung des Hinweises auf die Patenterteilung: **26.01.2000**
(21) Anmeldenummer: 95102465.2
(22) Anmeldetag: 22.02.1995
(51) Int. Cl.: B29C 53/10, B65H 23/32

(54) **Vorrichtung zum Flachlegen eines Blasfolienschlauches aus thermoplastischem Kunststoff**
Device for flattening a blown tubular thermoplastic film
Dispositif pour la mise à plat d'un film tubulaire soufflé en matière thermoplastique

(30) Priorität: 18.03.1994 DE 9404577 U
(43) Veröffentlichungstag der Anmeldung: 27.09.1995
(73) Patentinhaber: Reifenhäuser GmbH & Co. Maschinenfabrik, 53844 Troisdorf (DE)
(72) Erfinder: Kahlen, Wilhelm, D-53844 Troisdorf (DE)
(74) Vertreter: Honke, Manfred, Dr.-Ing.

(56) Entgegenhaltungen:
- EP-A- 0 191 114
- EP-A- 0 408 996
- DE-A- 3 832 057

## Beschreibung

Die Erfindung betrifft eine Vorrichtung zum Flachlegen eines Blasfolienschlauches aus thermoplastischem Kunststoff zu einem Flachschlauch mit zwei gegenüberliegenden Umschlagfalten, zum Umfalten des Flachschlauches sowie zum Abziehen des umgefalteten Flachschlauches zum Zwecke der Zuführung des Flachschlauches zu einer Aufwickelvorrichtung, - mit
einer Flachlegeeinrichtung, die zumindest zwei Flachlegequetschwalzen aufweist und den Blasfolienschlauch zu dem Flachschlauch flachlegt und
einem Umfaltsystem mit Wendestangen und Umlenkwalzen
wobei die Flachlegeeinrichtung und das Umfaltsystem eine gemeinsame vertikale Mittelachse aufweisen,
wobei die Flachlegequetschwalzen um die vertikale Mittelachse hinundhergehend schwenkbar sind,
wobei das Umfaltsystem unabhängig, aber abgestimmt auf die Schwenkbewegung der Flachlegequetschwalzen, um die vertikale Mittelachse hinundhergehend schwenkbar ist und die Abziehvorrichtung mit horizontaler Abziehwalze feststehend angeordnet ist. - Dem Umfaltsystem ist im allgemeinen eine zu den Flachlegequetschwalzen parallele Führungswalze vorgeschaltet. An die in Durchlaufrichtung des Flachschlauches letzte Umlenkwalze schließt sich die Abziehwalze an.

Vorrichtungen des vorstehend beschriebenen Aufbaus sowie der vorstehend beschriebenen Zweckbestimmung arbeiten hinter einer Extruderanlage, deren Werkzeugkopf als sog. Blaskopf ausgebildet ist und einen extrudierten Schlauch aus thermoplastifiziertem Kunststoff zu einem Blasfolienschlauch aufbläst. Der Blaskopf rotiert nicht, weder reversierend noch kontinuierlich. Die Extruderanlage ist stationär aufgestellt. Blasfolienschlauch bezeichnet einen langgestreckten Ballon des Umfanges von 2rπ , wenn r den Radius des langgestreckten Ballons in seinem mittleren Bereich angibt, im Bereich zwischen Blaskopf und Flachlegequetschwalzen (vgl. DE 26 39 551 C2). Beim Flachlegen des Flachfolienschlauches entstehen zwei Folienbahnen, die jeweils eine Breite von rπ aufweisen, die durch die Umschlagfalten vereinigt sind. Umfalten des Flachschlauches meint, daß die Umschlagfalten, bezogen auf den Umfang des Blasfolienschlauches, über den Umfang verlegt werden. Dazu bedarf es des Umfaltsystems. Das Umfalten erfolgt periodisch mit entsprechend reversierendem Antrieb der Flachlegeeinrichtung sowie der Wendestange und der Umlenkwalze des Umlaufsystems. Das Umfalten bewirkt, daß eventuelle systematische Fehler der Foliendicke im Blasfolienschlauch, die z. B. werkzeugbedingt sind, sich über die Breite des Flachschlauches so verteilen, daß beim Aufwickeln des Flachschlauches zum Coil bzw. beim Aufwickeln von aus dem Flachschlauch ausgetrennten Folienbahnen zum Coil die Fehler der Foliendicke sich nicht zu sog. Faßreifen addieren.

Bei der bekannten Vorrichtung, von der die Erfindung ausgeht (EP 0 408 996 A2), besitzt das Umfaltsystem im Bereich der Mittelachse der Flachlegequetscheinrichtung übereinander angeordnet zwei Wendestangen und diesen zugeordnet sowie mit Abstand von den Wendestangen zwei Umlenkwalzen, die zwei Schwenkebenen mit jeweils einer Umlenkwalze und einer Wendestange bilden. Den Umlenkwalzen läuft der Flachschlauch gleichsam senkrecht zu und senkrecht läuft der Flachschlauch von den Umlenkwalzen auch wieder ab. In einer zumeist als Ausgangsstellung bezeichneten Stellung der Wendestangen läuft der Flachschlauch den Wendestangen unter einem Winkel von 45° zu, und von diesen unter einem Winkel von 45° auch wieder ab, so daß eine sog. 90°-Umlenkung stattfindet. Bei der Schwenkbewegung verkleinert sich dieser maximale Winkel, um danach wieder größer zu werden. Die beschriebene Vorrichtung verlangt eine besondere Kinematik und die Kinematik verlangt die entsprechenden baulichen, antriebstechnischen und steuerungstechnischen Maßnahmen. Diese sind bekannt (vgl. z. B. EP 0 408 996 A2).

Die bekannten Vorrichtungen haben sich bewährt, jedoch können Probleme auftreten, wenn der langgestreckte Ballon einen sehr großen Durchmesser aufweist und folglich der Flachschlauch sehr breit ist. Hier können, auch werkstoffbedingt, beim Durchlauf des Flachschlauches durch das Umfaltsystem störende Faltenbildungen an dem Flachschlauch auftreten.

Der Erfindung liegt das technische Problem zugrunde, eine Vorrichtung des eingangs beschriebenen Aufbaus sowie der eingangs beschriebenen Zweckbestimmung so zu gestalten, daß auch bei breiten oder sehr breiten Flachschläuchen eine störende Faltenbildung im Umfaltsystem nicht entsteht.

Ausgehend von der eingangs beschriebenen Vorrichtung löst die Erfindung dieses technische Problem dadurch, daß das Umfaltsystem im Bereich der Mittelachse der Flachlegequetscheinrichtung übereinander drei Wendestangen und drei Umlenkwalzen aufweist, die drei Schwenkebenen mit jeweils einer Umlenkwalze und einer Wendestange bilden und unabhängig voneinander sowie aufeinander abgestimmt um die vertikale Achse reversierend angetrieben sind, und daß der Umlenkwinkel zwischen der einer Wendestange zulaufenden Flachschlauchbahn sowie der von der Wendestange ablaufenden Flachschlauchbahn insgesamt maximal 60° beträgt (zweimal 30°).

Die Erfindung geht von der Erkenntnis aus, daß die beschriebene störende Faltenbildung darauf beruht, daß bei breiten und sehr breiten Faltschläuchen die eingangs beschriebenen, bekannten Winkelverhältnisse faltenbildende Zwänge hervorrufen. Erfindungsgemäß wird daher der maximale Winkel zwischen der einer Wendestange zulaufenden Flachschlauchbahn sowie der von der Wendestange ablaufenden Flachschlauchbahn nicht auf 90°, sondern auf maximal 60° eingerichtet. Diese Reduzierung wird jedoch durch eine Erhöhung der Schwenkebenen auf drei kompensiert, so daß insgesamt in bezug auf die Umschlagfalten sich eine Verlegung um etwa 360° ergibt. An die aus der Tatsache, daß mit drei Schwenkebenen gearbeitet wird, resultierende Kinematik lassen sich die bekannten baulichen, antriebstechnischen und steuerungstechnischen Maßnahmen ohne Schwierigkeiten anpassen. Dabei kann an den Stand der Technik angeschlossen werden (vgl. EP 0 408 996 A2), es können aber auch andere bauliche und steuerungstechnische Maßnahmen ohne erfinderisches Zutun verwirklicht werden. Bei der erfindungsgemäßen Vorrichtung ist regelmäßig eine Zuführwalze vorgeschaltet und eine Abziehwalze ist nachgeschaltet.

Im folgenden wird die Erfindung anhand einer lediglich ein Ausführungsbeispiel darstellenden Zeichnung erläutert. Die Fig. 1, 2 und 3, die nebeneinanderstehend gezeichnet sind, zeigen eine Draufsicht auf die drei Wendeebenen einer erfindungsgemäßen Vorrichtung. Fig. 4 zeigt eine Seitenansicht, Fig. 5 eine Draufsicht der erfindungsgemäßen Vorrichtung, ausschnittsweise.

Die in den Figuren dargestellten Wendeebenen 1, 2, 3 gehören einer Vorrichtung zum Flachlegen eines Blasfolienschlauches aus thermoplastischem Kunststoff zu einem Flachschlauch 4 mit zwei gegenüberliegenden Umschlagfalten 5 an. Die Vorrichtung insgesamt dient zum Umfalten des Flachschlauches 4 sowie zum Abziehen des umgefalteten Flachschlauches zum Zwecke der Zuführung des Flachschlauches zu einer Aufwickelvorrichtung.

Zur Vorrichtung insgesamt gehört eine Flachlegeeinrichtung, die zumindest zwei Flachlegequetschwalzen aufweist und den Blasfolienschlauch zu dem Flachschlauch 4 flachlegt. Es gehört dazu fernerhin das Umfaltsystem mit Wendestangen und Umlenkwalzen. Insoweit wird beispielsweise verwiesen auf EP 0 408 996 A2. Man erkennt hier, daß die Flachlegeeinrichtung und das Umfaltsystem eine gemeinsame vertikale Achse aufweisen. Die Flachlegequetschwalzen sind um die vertikale Mittelachse hinundhergehend schwenkbar. Das Umfaltsystem ist unabhängig davon, aber abgestimmt auf die Schwenkbewegung der Flachlegequetschwalzen, um die vertikale Mittelachse hinundhergehend schwenkbar. Die Abziehvorrichtung ist mit horizontaler Abziehwalze feststehend angeordnet.

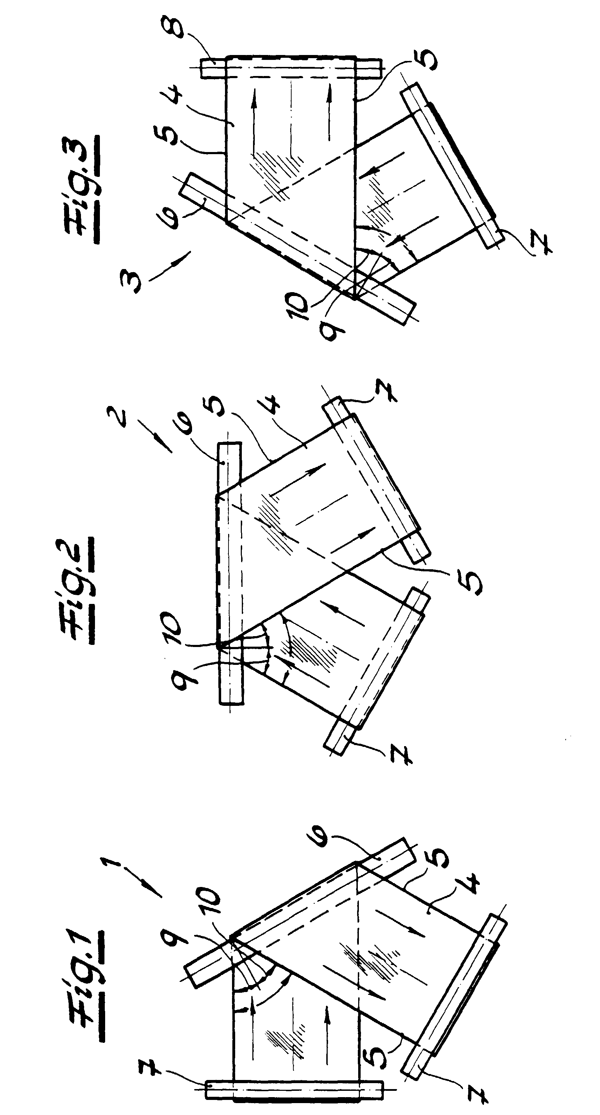

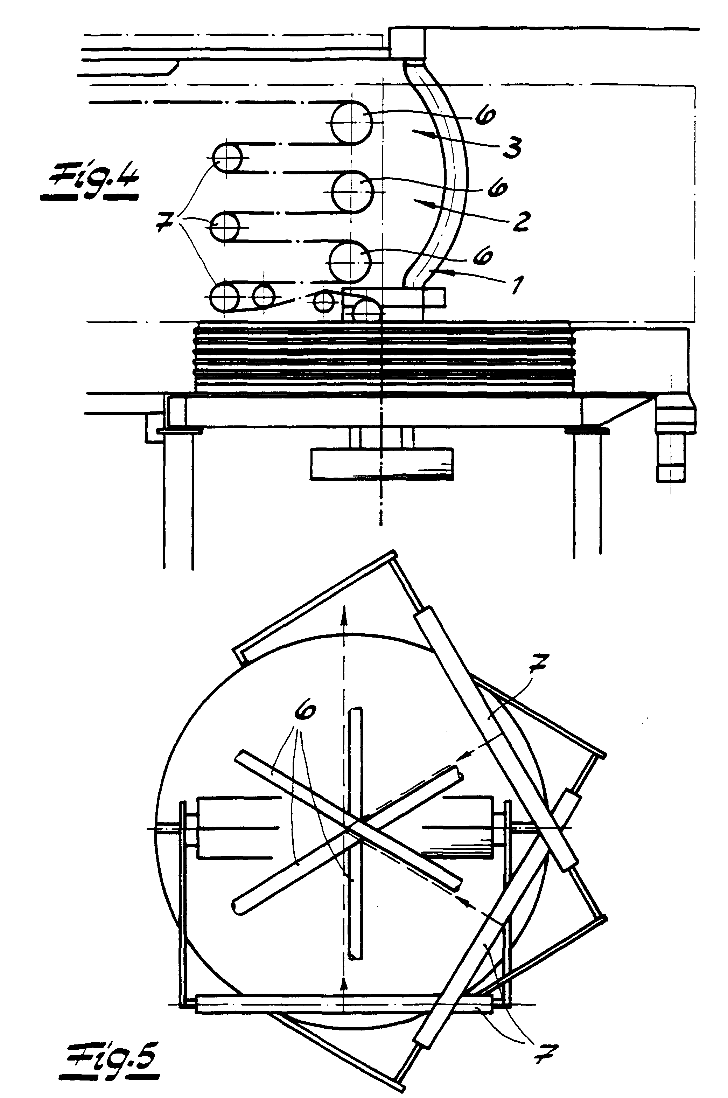

Aus den Fig. 1 bis 3 entnimmt man, daß das Umfaltsystem der Flachlegequetscheinrichtung übereinander drei Wendestangen 6 und drei Umlenkwalzen 7 aufweist. Eine vierte Umlenkwalze 8 ist nachgeschaltet, sie führt die Flachschlauchbahn 4 zur Aufwickelvorrichtung. Die drei Schwenkebenen 1, 2, 3 mit jeweils einer Umlenkwalze 7 und einer Wendestange 6 sind unabhängig voneinander sowie aufeinander abgestimmt um die vertikale Achse reversierend antreibbar. Man erkennt, daß der maximale Winkel 9 zwischen der einer Wendestange 6 zulaufenden Flachschlauchbahn 4 sowie der Winkel 10 der von der Wendestange 6 ablaufenden Flachschlauchbahn 4 jeweils 30° betragen, der Umlenkwinkel insgesamt also maximal 60° beträgt.

In der Seitenansicht der Fig. 4 erkennt man in einer besonderen Funktionsstellung die Schwenkebenen 1, 2, 3 mit ihren Wendestangen 6 und den Umlenkwalzen 7 übereinander. In der Draufsicht der Fig. 5 erkennt man die Wendestangen 6 und die Umlenkwalzen 7 in einer Endlage ihrer hinundhergehenden Schwenkbewegung.

## Patentansprüche

1. Vorrichtung zum Flachlegen eines Blasfolienschlauches aus thermoplastischem Kunststoff zu einem Flachschlauch mit zwei gegenüberliegenden Umschlagfalten, zum Umfalten des Flachschlauches sowie zum Abziehen des umgefalteten Flachschlauches zum Zwecke der Zuführung des Flachschlauches zu einer Aufwickelvorrichtung, - mit
einer Flachlegeeinrichtung, die zumindest zwei Flachlegequetschwalzen aufweist und den Blasfolienschlauch zu dem Flachschlauch flachlegt und
einem Umfaltsystem mit Wendestangen und Umlenkwalzen,
wobei die Flachlegeeinrichtung und das Umfaltsystem eine gemeinsame vertikale Mittelachse aufweisen,
wobei die Flachlegequetschwalzen um die vertikale Mittelachse hinundhergehend schwenkbar sind,
wobei das Umfaltsystem unabhängig, aber abgestimmt auf die Schwenkbewegung der Flachlegequetschwalzen, um die vertikale Mittelachse hinundhergehend schwenkbar ist und die Abziehvorrichtung mit horizontaler Abziehwalze feststehend angeordnet ist,
**dadurch gekennzeichnet,**
daß das Umfaltsystem im Bereich der Mittelachse der Flachlegequetscheinrichtung übereinander drei Wendestangen (6) und drei Umlenkwalzen (7) aufweist, die drei Schwenkebenen (1, 2, 3) mit jeweils einer Umlenkwalze (7) und einer Wendestange (6) bilden und unabhängig voneinander sowie aufeinander abgestimmt um die vertikale Achse reversierend angetrieben sind, und daß der Umlenkwinkel (9) zwischen der einer Wendestange (6) zulaufenden Flachschlauchbahn (4) sowie der Umlenkwinkel (10) von der Wendestange (6) ablaufenden Flachschlauchbahn (4) jeweils maximal 30° beträgt.

## Claims

1. An apparatus for laying flat a blown film of flexible tubing made of thermoplastic synthetic material to form flat tubing comprising two opposite turn-over folds, for folding over the flat tubing and for pulling off the folded-over flat tubing for the purpose of feeding the flat tubing to a take-up apparatus, - comprising
a lay-flat device which comprises at least two lay-flat squeezing rolls and which lays the blown film tubing flat to form the flat tubing,
a fold-over system comprising turning bars and deflection rolls,
wherein the lay-flat device and the fold-over system have a common vertical central axis,
wherein the lay-flat squeezing rolls can swivel to and fro about the vertical central axis,
wherein the fold-over system can swivel to and fro, independently but matched to the swivelling movement of the lay-flat squeezing rolls, about the vertical central axis, and the pull-off device, which comprises a horizontal pull-off roll, is stationary,
characterised in that
in the region of the central axis of the lay-flat squeezing device the fold-over system comprises three turning bars (6) disposed one above another and three deflection rolls (7) disposed one above another, which form three planes of swivelling (1, 2, 3) each comprising a deflection roll (7) and a turning bar (6), and which are reversibly driven, independently of each other but matched to each other, about the vertical axis, and that the angle of deflection (9) between the length of flat tubing (4) travelling towards one turning bar (6) and the angle of deflection (10) of the length of flat tubing (4) travelling away from said turning bar (6) is a maximum of 30° in each case.

## Revendications

1. Dispositif pour mettre à plat un tuyau soufflé fait d'un film de matière thermoplastique et obtenir un tuyau plat avec deux plis de rabat opposés pour replier le tuyau plat ainsi que pour tirer le tuyau plat replié afin d'amener le tuyau plat à un dispositif d'enroulement, - comportant
un dispositif de mise à plat qui comporte au moins deux cylindres d'écrasement à plat et qui met à plat le tuyau soufflé en film pour obtenir le tuyau plat et
un système de repliage avec barres de retournement et cylindres de renvoi,
le dispositif de mise à plat et le système de repliement présentant un axe central vertical commun,
les cylindres d'écrasement à plat pouvant pivoter dans un sens et dans l'autre autour de l'axe central vertical,
le système de repliage pouvant pivoter dans un sens et dans l'autre indépendamment des cylindres d'écrasement à plat, mais de manière adaptée à leur mouvement de pivotement, autour de l'axe central vertical et le dispositif de tirage étant disposé fixement avec cylindre de tirage horizontal,
caractérisé en ce que
le système de repliage comporte, dans la région de l'axe central du dispositif d'écrasement à plat, l'un au-dessus de l'autre, trois barres de retournement (6) et trois cylindres de renvoi (7) qui forment trois plans de pivotement (1, 2, 3) avec chacun un cylindre de renvoi (7) et une barre de retournement (6) et qui sont entraînés de manière réversible autour de l'axe vertical, indépendamment les uns des autres et de manière adaptée les uns aux autres, et en ce que l'angle de renvoi (9) du tronçon de tuyau plat (4) menant à une barre de retournement (6) et l'angle de renvoi (10) du tronçon de tuyau plat (4) partant de la barre de retournement (6), sont chacun au maximum de 30°.
